# FASCICULE DE BREVET EUROPEEN

(11) **EP 3 384 750 B1**
(45) Date de publication et mention de la délivrance du brevet: **01.01.2020**
(21) Numéro de dépôt: 18165993.9
(22) Date de dépôt: 06.04.2018
(51) Int. Cl.: A01C 19/04

(54) **MACHINE AGRICOLE AVEC UN SYSTÈME D'ENTRAÎNEMENT**
LANDWIRTSCHAFTLICHE MASCHINE MIT EINEM ANTRIEBSSYSTEM
AGRICULTURAL MACHINE HAVING A DRIVING SYSTEM

(30) Priorité: 07.04.2017 FR 1753058
(43) Date de publication de la demande: 10.10.2018
(73) Titulaire: Kuhn S.A., 67700 Saverne (FR)
(72) Inventeur: SCHMITT, Guillaume, 67250 Surbourg (FR); BLAS, Baptiste, 67700 Saverne (FR)
(74) Mandataire: Esch, Esther Evelyne

(56) Documents cités:
- EP-A1- 1 163 831
- EP-A1- 1 618 776
- DE-A1- 10 116 374
- DE-A1- 10 349 624

## Description

La présente invention se rapporte au domaine technique général du machinisme agricole et en particulier au domaine du semis. L'invention concerne un système d'entrainement de l'organe de distribution d'une machine agricole pourvue d'une roue d'entrainement par contact au sol. Une telle roue est souvent appelée roue soleil ou roue squelette. L'expression « roue d'entrainement » sera conservée dans la suite de ce texte. L'invention concerne également une telle machine agricole.

Un exemple de semoir mécanique comporte une trémie, une pluralité d'éléments de rang (qui comportent a minima des socs ou disques ouvreurs, et une roue de rappui), une rangée de dents de recouvrement et une roue d'entrainement. Chaque élément de rang, ou élément de semis, est alimenté en semences par gravité depuis la trémie par l'intermédiaire d'un organe de distribution tel qu'une roue cannelée. La roue cannelée est animée en rotation depuis la roue d'entrainement via une transmission mécanique. La rotation de la roue cannelée permet de contrôler la dose de semences distribuée par unité d'avancement.

On connait de l'art antérieur différents types de transmissions mécaniques reliant la roue d'entrainement aux organes de distribution.

Au travail, la roue d'entrainement peut être disposée dans la largeur de la barre de semis : elle se trouve alors entre les éléments de semis et peut dépasser à l'arrière de ceux-ci, voire dépasser à l'arrière de la rangée de dents de recouvrement. Pour permettre la circulation du semoir sur route, la roue d'entrainement peut devoir être démontée, ce qui est gourmand en temps pour l'utilisateur et nécessite de prévoir un point d'accrochage de la roue pour le transport. Alternativement, un bras support peut permettre le relevage de la roue d'entrainement dans un plan vertical. Selon les dimensions de la roue d'entrainement et de la machine, il se peut que la roue d'entrainement s'étende aussi vers l'arrière au-delà des dents de recouvrement en position de transport. Dans d'autres configurations, saisir la roue d'entrainement pour la rabaisser vers la position de travail exige de se pencher au-dessus des éléments semeurs, ce qui n'est pas pratique et présente des risques d'accident.

En variante, la roue d'entrainement peut être disposée sur le côté du semoir au travail. La roue d'entrainement peut par exemple être montée sur un arbre d'entrainement télescopique. La roue d'entrainement est alors plaquée contre le semoir en position de transport. Ce système ne peut pas être mis en œuvre sur les semoirs mécaniques de plus grande largeur.

Le brevet EP1163831 divulgue un semoir mécanique dans lequel, pour escamoter la roue d'entrainement, le bras est basculé vers le haut autour d'un premier axe 25A qui est transversal à la direction d'avance de la machine puis autour d'un deuxième axe 22A transversal au premier. Ce deuxième axe change d'orientation au cours du basculement du bras autour du premier axe. Cette structure est efficace dans son fonctionnement. Toutefois, le mécanisme de transmission de l'entrainement comporte une paire de joints de Cardan et des renvois d'angle, ce qui le rend coûteux et compliqué à fabriquer. En outre, la roue d'entrainement peut interférer avec les éléments de semis dans certaines positions hautes de ces derniers.

L'invention vise à résoudre les inconvénients précités et à proposer un système à roue d'entrainement pour lequel le passage en position de transport soit aisé, qui soit bon marché à produire et dont le fonctionnement soit efficace.

Ainsi, l'invention porte sur une machine agricole comportant un système d'entrainement d'un organe de distribution de machine agricole, le système d'entrainement comportant :
- une roue d'entrainement ;
- une transmission mécanique comportant un organe de transmission depuis la roue d'entrainement ;
- un bras supportant la transmission mécanique.
Le bras est monté à rotation sur une articulation d'axe transversal à un plan préférentiellement vertical s'étendant dans la largeur de la machine agricole. Selon l'invention, le bras est pivotable d'une position de travail à une position de transport autour de l'axe par l'extérieur de la machine.

Grâce à cette dernière caractéristique et au caractéristiques additionnelles décrites ci-après, l'escamotage et le dépliage du système d'entrainement sont facilités.

En outre, l'encombrement au remisage et au transport est particulièrement restreint. Notamment, le système d'entrainement est contenu dans les gabarits routiers en longueur, en hauteur et en largeur.

Dans le cas précis d'un semoir mécanique tel que décrit en détail ci-après, le système d'entrainement ne connait d'interférence ni avec l'échelle ni avec les éléments semeurs.

D'autres caractéristiques et avantages de l'invention se dégageront des exemples de réalisation non limitatifs de l'invention qui vont suivre et des dessins annexés dans lesquels :
- la figure 1 est une vue de côté d'un semoir mécanique comportant un système d'entrainement, montrant le système d'entrainement en position de travail ;
- la figure 2 est une vue de côté du semoir mécanique de la figure 1 montrant le système d'entrainement en position de transport ;
- la figure 3 est un détail de l'articulation de repliage du bras du système d'entrainement de la figure 1 lorsque celui-ci est en position de travail ;
- la figure 4 est un détail de l'articulation de la figure 3 lorsque le système d'entrainement est en position de transport ;
- la figure 5 est une vue en perspective d'une potence reliant le bras au corps du semoir ;
- la figure 6 est un schéma en vue arrière du semoir mécanique de la figure 1 montrant différent plans.

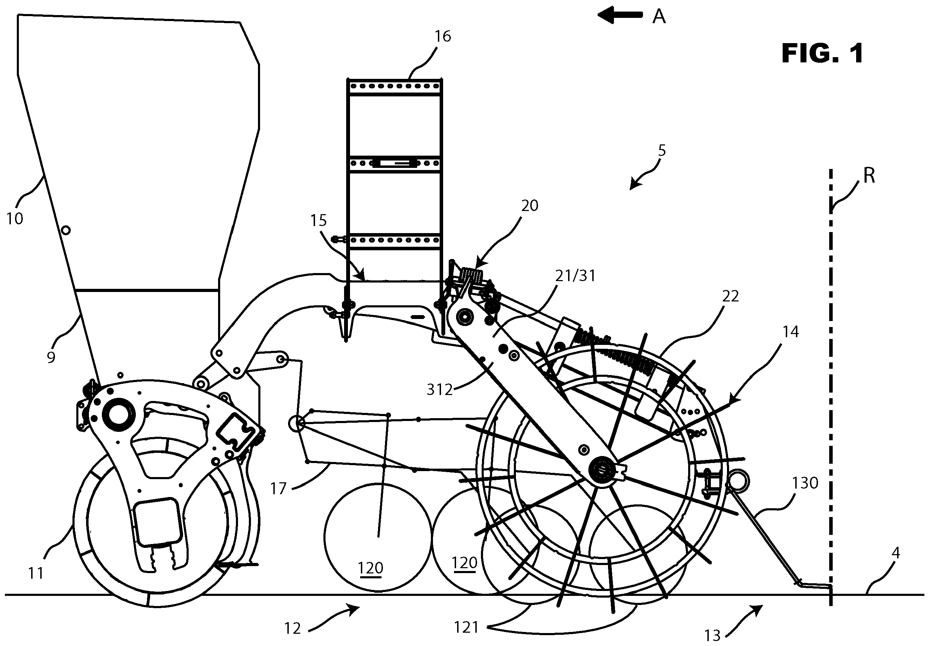

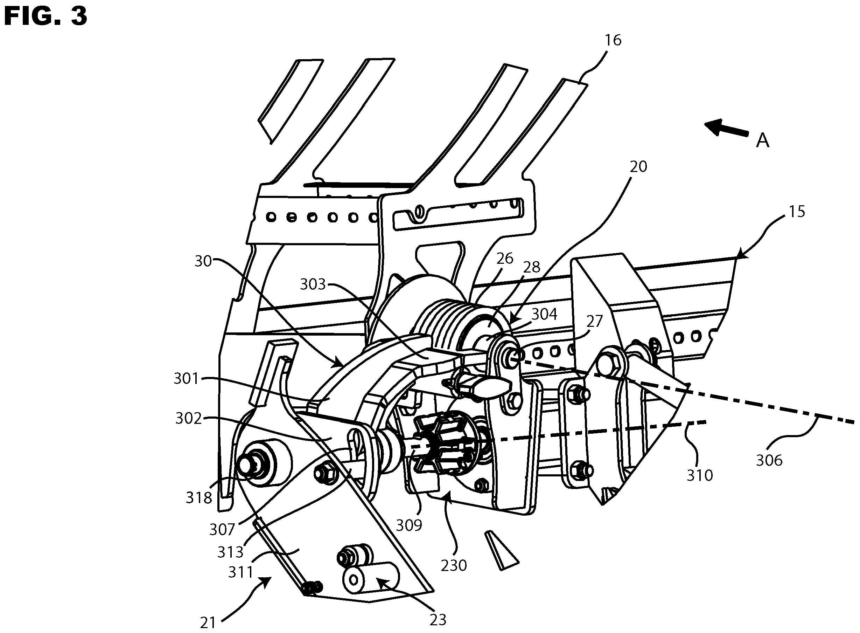

La figure 1 illustre un exemple de semoir mécanique 5 posé au sol 4. Un tel semoir 5 est par exemple combiné à un outil de travail du sol tel que l'organe de compactage 11 prévu pour être attelé à un tracteur. Le tracteur peut classiquement soulever le semoir 5 combiné à l'outil de travail du sol pour le transporter sur route, et l'abaisser pour l'amener en position de travail en champs. Les figures 1 et 3 illustrent une direction d'avance A du tracteur et du semoir 5.

Le semoir 5 comporte ici un châssis 9, une trémie 10, un organe de compactage 11 ou rouleau, des éléments semeurs 12 ou éléments de semis, un système de recouvrement 13, un système d'entrainement 14, une plateforme 15, une échelle 16 et un système de distribution (non représenté mais détaillé plus loin). En outre, le semoir 5 comporte des éléments d'attelage permettant de l'accrocher par exemple à une machine de travail du sol (non représentés).

La trémie 10 est ici montée sur le châssis 9, sensiblement à la verticale du rouleau 11.

Les éléments semeurs 12 sont disposés à l'arrière du rouleau 11. Les éléments 12 sont montés articulés au châssis 9 par l'intermédiaire de systèmes de liaison 17 déformables. Chaque élément semeur 12 comporte par exemple une paire de disques d'ouverture de sillon 120 et une roue de rappui 121. Les semences sont déposées par gravité entre les disques d'ouverture 120 au gré du déplacement du semoir 5 dans le champ. Les éléments semeurs 12 sont chacun alimentés en semences par gravité depuis la trémie 10, par l'intermédiaire d'un organe de distribution respectif tel qu'une roue cannelée. La roue cannelée est animée en rotation depuis une roue d'entrainement 22 via une transmission mécanique 23 (figure 1, détails ci-après).

Le système de recouvrement 13 est disposé à l'arrière des éléments semeurs 12. Le système de recouvrement 13 comporte ici notamment une série de dents de recouvrement 130 dimensionnées de manière à affleurer le sol de manière à refermer les sillons sur les semences et donc à en optimiser la germination.

La plateforme 15 est disposée à l'arrière de la trémie 10 et s'étend au moins partiellement au-dessus des éléments semeurs 12. L'échelle 16 est montée en une extrémité latérale de la plateforme 15 et permet ainsi à un utilisateur de monter à la plateforme, par exemple pour contrôler le niveau de remplissage de la trémie 10 ou pour remplir celle-ci.

Le système d'entrainement 14 comporte un dispositif de liaison 20 ou articulation, un bras 21, une roue d'entrainement 22 et un système de transmission mécanique 23 ou transmission.

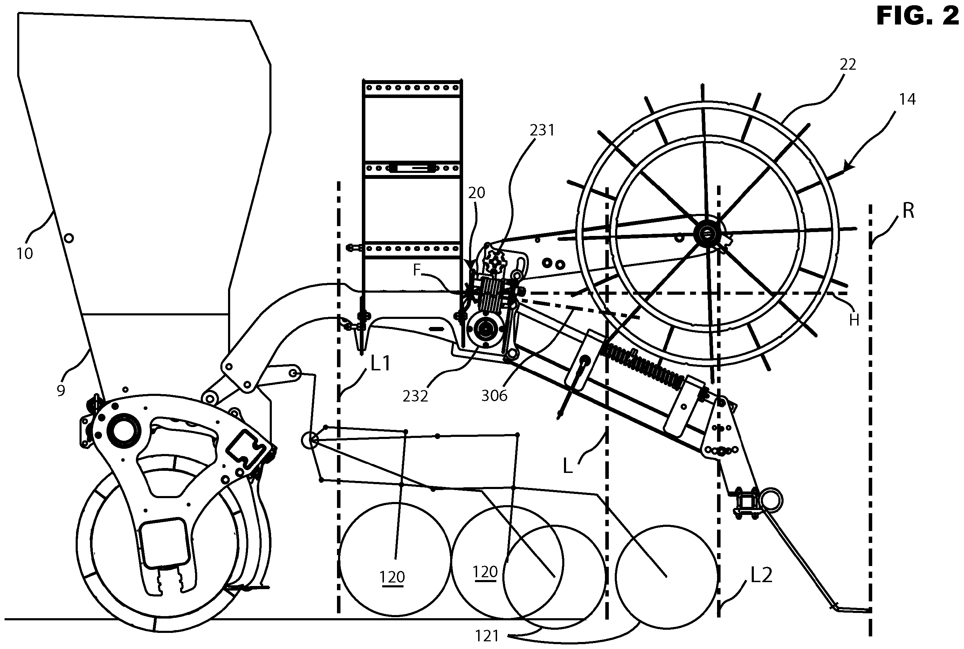

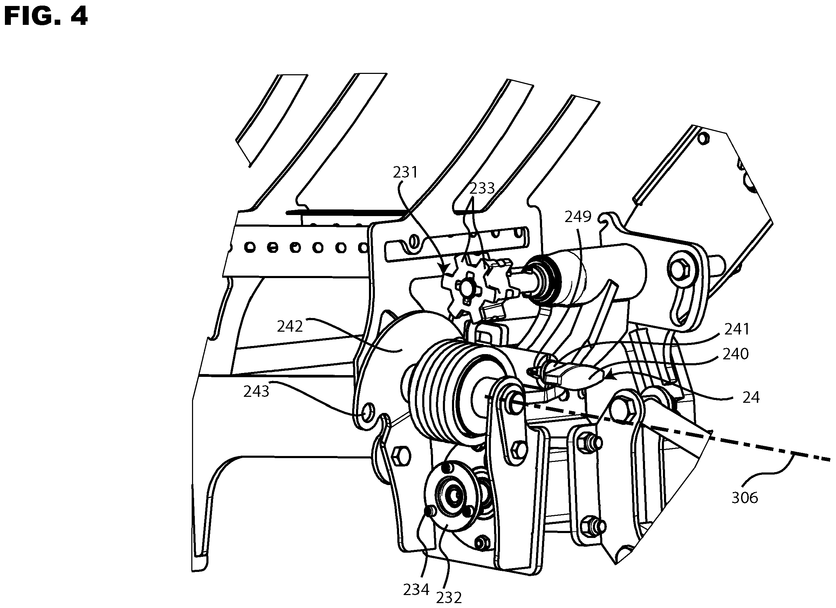

Le système d'entrainement 14 est basculable autour d'un axe 306 depuis une position de travail (figures 1 et 3) vers une position de transport (figures 2 et 4), et inversement. En position de travail, la roue d'entrainement 22 montée en une extrémité du bras 21 est en contact avec le sol 4. En position de travail, le système d'entrainement 14 est placé sur le côté de la machine, à côté des éléments semeurs 12. Le système d'entrainement 14 est alors compris dans le gabarit en longueur du semoir 5, c'est-à-dire à l'avant d'un plan R transversal à la direction d'avance A et passant par l'extrémité arrière des dents de recouvrement 130. En position de transport, la roue 22 est escamotée au-dessus des éléments semeurs 12, à l'arrière de la plateforme 15. En position de transport, le système d'entrainement 14 s'inscrit également dans le gabarit routier en longueur, hauteur et largeur. Il est toujours strictement compris à l'avant du plan R.

Le bras 21 est ici monté via l'articulation 20 à une structure de référence telle qu'une barre de la plateforme 15. Alternativement, l'articulation 20 relie le bras 21 à une autre structure de référence appartenant au corps principal du semoir, telle que le châssis 9 supportant la trémie.

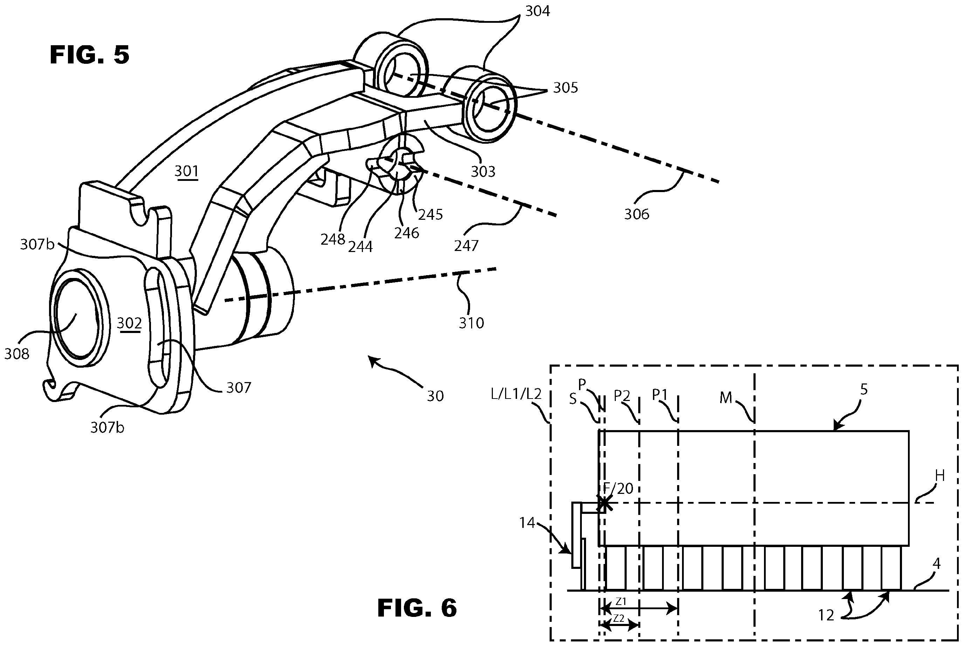

Le bras 21 comporte ici une potence 30 (en anglais strut) et un carter allongé 31. La potence 30 se présente ici sous forme de deux flasques principaux 301 et 302 (voir figure 5). La potence 30 sert de pièce de support du bras 21 par rapport à la plateforme 15.

Le premier flasque 301 est de forme recourbée. Le flasque 301 comporte en une première extrémité une fourche 303 pourvue de deux bagues 304. Les bagues 304 présentent un logement interne 305 ayant pour axe longitudinal l'axe 306. L'axe 306 est transversal, préférentiellement perpendiculaire, au plan général du flasque 301. A l'extrémité du flasque 301 opposée à la fourche 303, la potence 30 présente un logement 308 prévu pour un arbre d'entrainement 309 décrit plus loin. Le logement 308 s'étend selon un axe 310 qui est ici dans le plan général du flasque 301.

Un logement cylindrique 244 pour un verrou 24 décrit plus loin est par ailleurs prévu sous la fourche 303. Le logement 244 est ici d'axe 247 aligné avec l'axe 306. Le logement 244 présente un rebord globalement plat 245 pourvu de crans 246 et d'encoches 248 plus profondes que les crans 246. Les crans 246 sont alignés en regard l'un de l'autre. Les encoches 248 sont alignées en regard l'une de l'autre et à 90° des crans 246.

Le deuxième flasque 302 est orienté transversalement au premier flasque 301, préférentiellement perpendiculairement à celui-ci. Le flasque 302 présente une lumière 307 allongée, incurvée en arc de cercle autour de l'axe 310 du logement 308.

Le carter allongé 31 est monté sur la potence 30, transversalement, préférentiellement perpendiculairement à l'orientation générale de celle-ci. Le carter 31 est prévu pour envelopper une partie de la transmission 23. Plus précisément, le carter 31 comporte ici une plaque support 311 sur laquelle sont fixés les pignons et galets portant une chaine de la transmission 23. La roue d'entrainement 22 est montée en une première extrémité du carter 31. En une deuxième extrémité du carter 31 opposée à la première extrémité, un logement 318 est prévu pour accueillir l'arbre d'entrainement 309, centré sur l'axe 310. La rotation de la roue 22 est ainsi transmissible à l'arbre d'entrainement 309 via la chaine.

Un capot 312 recouvre la plaque 311, les pignons, les galets et la chaine pour prévenir tout accident. Un pion 313 est fixé à la plaque 311, par exemple vissé. Le pion 313 s'étend en saillie à l'extérieur du carter 31, à l'opposé du capot 312.

Le carter 31 et la potence 30 sont disposés l'un par rapport à l'autre de sorte que la plaque support 311 soit généralement parallèle au deuxième flasque 302, par exemple à plat contre celui-ci ou séparé par une entretoise. L'arbre d'entrainement 309 est monté à la fois dans le logement 318 du carter 31 et dans le logement 308 de la potence 30.

La partie du pion 313 saillant hors du carter 31 est logée dans la lumière 307 de la potence 30. Au travail, le carter 31 peut pivoter verticalement autour de l'axe 310 de l'arbre d'entrainement 309 par rapport à la potence 30. L'ensemble formé par le pion 313 et la lumière 307 permet de guider le carter 31 par rapport à la potence 30 au travail, lors du suivi de terrain. Les extrémités haute 307a et basse 307b de la lumière limitent le débattement vertical possible du bras 21 et de la roue 22.

La roue d'entrainement 22 présente ici non limitativement des rayons 220, deux anneaux 221 concentriques et un moyeu 222.

L'articulation 20 comporte ici un ressort hélicoïdal 26, un axe de pivot 27 et un moyeu 28. Le ressort hélicoïdal 26 est pourvu de pattes, ici masquées, configurées de manière à offrir une force d'assistance au repliage vers la position de transport. En d'autres termes, le ressort hélicoïdal est configuré pour s'opposer au poids du système d'entrainement 14, pour en faciliter le relevage vers la position de transport et pour le retenir et en empêcher la chute depuis sa position de transport.

Le ressort 26 est monté sur le moyeu 28, lui-même monté sur l'axe de pivot 27, entre les bagues 304, selon le même axe longitudinal 306.

La transmission 23 comporte une chaine (non représentée ici) et un système à crabot 230. La partie de la transmission 23 qui s'étend jusqu'aux organes de distribution, interne au corps du semoir, n'est pas représentée ici ni décrite plus en détail car connue de l'homme du métier.

Le système à crabot 230 présente une tête 231 et une platine 232. La tête est en forme d'étoile à six branches 233. La tête 231 est montée en une extrémité de l'arbre 309 et est mise en mouvement depuis la chaine. La platine 232 est une plaque d'extrémité d'un arbre pénétrant dans la structure de référence 15 pour transmettre le mouvement vers le système de distribution. La platine 232 est pourvu de prises 234, ici trois têtes de vis disposées régulièrement sur le pourtour de la platine 232. L'engagement de la tête 231 sur la platine 232 par l'action des branches 233 sur les prises 234 permet de transmettre la rotation de la roue 22 vers le système de distribution.

Un verrou 24 est prévu pour bloquer dans un état d'engagement le système d'entrainement 14 en position de travail ou en position de transport. Le verrou 24 admet un deuxième état : un état libre dans lequel il autorise le basculement du système d'entrainement 14 entre l'une et l'autre des positions de travail et de transport.

Le verrou 24 comporte une partie mobile ayant une poignée 240 montée sur une tige 241. Une goupille 249 est en saillie de part et d'autre de la tige 241. La tige 241 est montée dans le logement 244, la poignée 240 étant rappelée vers le logement 244 par un ressort non représenté.

Le verrou 24 comporte par ailleurs une partie fixe formée ici par une plaque 242 fixée ici à la plateforme 15. La plaque 242 est pourvue de deux logements 243 dont l'un seulement est visible en figure 4. A l'état d'engagement du verrou 24, l'un ou l'autre des logements 243 accueille l'extrémité distale de la tige 241 (oppose à la poignée 240) selon que le système d'entrainement se trouve en position de travail ou en position de transport. A l'état d'engagement, la goupille 249 est logée dans les encoches 248.

Pour faire basculer le système d'entrainement 14 d'une position à l'autre, il convient de désengager le verrou 24 et de le faire passer à l'état libre. La tige 241 est alors extraite du logement 243 correspondant. La poignée 240 peut alors être tournée d'un quart de tour de manière à déposer la goupille 249 dans les crans 246. Cette configuration permet à l'utilisateur d'avoir les mains libres pour faire basculer le système d'entrainement 14 d'une position à l'autre autour de l'axe 306. Une fois la position souhaitée atteinte, la poignée 240 est de nouveau tournée d'un quart de tour et la goupille 249 logée dans les encoches 248.

Lorsque le système d'entrainement 14 bascule depuis la position de travail, le crabot 230 est automatiquement désaccouplé. La manœuvre permettant le passage de la position de travail à la position de transport est donc particulièrement simple : elle n'exige que de déverrouiller le verrou 24 et de relever le système d'entrainement 14.

Pourvue d'un tel verrou, la machine agricole est exempte de composant à démonter et qui risque d'être perdu. Ainsi, le système d'entrainement est basculable sans outil distinct vers l'une ou l'autre de la position de transport et de la position de travail.

L'articulation 20 et le système d'entrainement 14 peuvent être situés d'un côté ou de l'autre de la machine tant que le basculement d'une position vers l'autre commence par une rotation vers l'extérieur de la machine, c'est-à-dire à l'opposé du plan médian M de la machine agricole 5 qui est orienté selon la direction d'avance A.

On comprend donc que le système d'entrainement 14 d'un organe de distribution de la machine agricole 5, comporte a minima : une roue d'entrainement 22, une transmission mécanique 23 comportant un organe de transmission depuis la roue d'entrainement 22, un bras 21 supportant la transmission mécanique 23. Le bras 21 est monté à rotation sur une articulation 20 d'axe 306 transversal à un plan L s'étendant dans la largeur de la machine agricole (figures 2 et 6), le plan L étant préférentiellement vertical. Avantageusement, le bras 21 est pivotable d'une position de travail à une position de transport autour de l'axe 306 par l'extérieur de la machine.

Selon une caractéristique avantageuse de l'invention, l'articulation 20 est disposée dans une zone latérale Z1 correspondant au quart extérieur de la machine considérée dans sa largeur, préférentiellement dans une zone latérale Z2 d'une largeur inférieure au huitième de la largeur de la machine 5 (figure 6). Les zones Z1 et Z2 sont délimitées respectivement par un plan P1 et P2 parallèle au plan médian M de la machine. Ainsi, le bras 21 sera-t-il rabattu à proximité du flan de la machine et sera facile d'une part à saisir, et d'autre part à manipuler d'une position vers l'autre.

Selon une autre caractéristique avantageuse de l'invention, dans le cas du semoir 5 qui comporte une plateforme 15 tel que décrit ci-dessus, l'articulation 20 est disposée derrière l'échelle 16. Ainsi, le système d'entrainement 14 n'interfère à aucun moment avec l'échelle 16, que le système d'entrainement 14 soit en position de travail, en position de transport ou en train d'être basculé d'une position à l'autre.

Dans un semoir tel que le semoir 5, l'articulation 20 est préférentiellement disposée entre un plan L1 s'étendant dans la largeur de la machine agricole et passant par un point avant des disques d'ouverture de sillon 120, et un plan L2 s'étendant dans la largeur de la machine agricole et passant par un point arrière des roues de rappui 121 (figure 2) les plans L1 et L2 étant préférentiellement l'un et/ou l'autre verticaux.

Avantageusement, l'axe 306 est orienté vers l'arrière et vers le bas depuis un point avant F de l'articulation 20 (figure 2). L'axe 306 peut aussi être orienté vers l'arrière et horizontalement depuis le point avant F. L'axe 306 s'étend alors dans une zone délimitée par le haut par un plan horizontal H passant par le point F, et par un plan P parallèle à un plan médian M de la machine agricole. L'axe 306 peut aussi être disposé directement dans le plan P. L'axe 306 peut encore être disposé dans un plan latéral S qui est parallèle au plan M, sur l'un des côtés de la machine 5.

Dans une configuration préférée, l'axe 306 est incliné vers le bas et vers l'arrière de 5 à 15 degrés par rapport à l'horizontale, préférentiellement de 8 degrés. Cette légère inclinaison vers le bas et vers l'arrière de la machine permet de respecter le gabarit routier.

En variante non illustrée, le flasque 301 ne comporte qu'une bague 304. La présence d'une deuxième bague 304 offre toutefois une meilleure stabilité à la potence 30 et au système d'entrainement 14.

En variante non représentée, le système d'entrainement est mis en œuvre dans une machine agricole de distribution non pas de graines contrairement au semoir 5 mais d'autres types de poudres ou de granulés tel que de l'engrais ou de l'insecticide.

En variante non représentée, le système à crabot 230 est remplacé par un système d'engrenage à doigts.

## Revendications

1. Machine agricole comportant un système d'entrainement (14) d'un organe de distribution, le système d'entraînement (14) comportant :
- une roue d'entrainement (22) ;
- une transmission mécanique (23) comportant un organe de transmission depuis la roue d'entrainement (22) ;
- un bras (21) supportant la transmission mécanique (23) ;
le bras (21) étant monté à rotation sur une articulation (20) d'axe (306) transversal à un plan (L) s'étendant dans la largeur de la machine agricole, ***caractérisé en ce que :***
ledit axe (306) de l'articulation (20) est orienté vers l'arrière et vers le bas, ou vers l'arrière et horizontalement, depuis un point avant (F) de l'articulation (20), le bras (21) est pivotable d'une position de travail à une position de transport autour de l'axe (306) par l'extérieur de la machine.

2. Machine agricole selon la revendication précédente dans laquelle l'articulation (20) est disposée dans un quart extérieur de la machine considérée dans sa largeur.

3. Machine agricole selon l'une des revendications précédentes dans laquelle l'articulation (20) est disposée derrière une échelle (16) que comporte la machine agricole.

4. Machine agricole selon l'une des revendications précédentes dans laquelle l'axe (306) est orienté dans un quart de cône vers l'arrière considéré depuis un point avant (F) de l'articulation (20), le quart de cône étant délimité par un plan horizontal (H) et par un plan (P) parallèle à un plan médian (M) de la machine agricole, l'axe (306) étant incliné vers le bas et vers l'arrière de 5 à 15 degrés par rapport à l'horizontale, préférentiellement de 8 degrés.

5. Machine agricole selon l'une des revendications précédentes dans laquelle l'axe (306) est orienté dans le plan (P) parallèle à un plan médian (M) de la machine agricole.

6. Machine agricole selon l'une des revendications précédentes dans laquelle l'organe de transmission est une chaine.

7. Machine agricole selon l'une des revendications précédentes, ladite machine agricole étant un semoir mécanique (5), ou une machine agricole de distribution de poudres ou de granulés.

## Patentansprüche

1. Landwirtschaftliche Maschine mit einem Antriebssystem (14) für ein Verteilungselement, wobei das Antriebssystem (14) mit
- einem Antriebsrad (22);
- einer mechanischen Übertragungsvorrichtung (23) mit einem vom Antriebsrad (22) aus Übertragungselement;
- einem die mechanische Übertragungsvorrichtung (23) tragenden Arm (21);
versehen ist, wobei der Arm (21) drehbar an einem Gelenk (20) angebracht ist, welches eine sich zu einer sich über die Breite der landwirtschaftlichen Maschine erstreckende Ebene (L) querlaufende Achse (306) aufweist, ***dadurch gekennzeichnet, dass*:**
die Achse (306) des Gelenks (20) nach Hinten und nach Unten, oder nach Hinten und horizontal von einem vorderen Punkt (F) des Gelenks (20) aus gerichtet ist, wobei der Arm (21) von ausserhalb der Maschine, aus einer Arbeitsstellung in eine Transportstellung um die Achse (306) geschwenkt werden kann.

2. Landwirtschaftliche Maschine nach dem vorhergehenden Anspruch, in welcher das Gelenk (20) in einem Aussenviertel der in seiner Breite betrachteten Maschine, angebracht ist.

3. Landwirtschaftliche Maschine nach einem der vorhergehenden Ansprüche, in welcher das Gelenk (20) hinter einer Leiter (16), welche die landwirtschaftliche Maschine aufweist, angebracht ist.

4. Landwirtschaftliche Maschine nach einem der vorhergehenden Ansprüche, in welcher die Achse (306) in einem Kegelviertel von einem vorderen Punkt (F) des Gelenks (20) aus betrachtet nach Hinten gerichtet ist, wobei das Kegelviertel durch eine Horizontalebene (H) und eine zu einer Mittelebene (M) der landwirtschaftlichen Maschine parallelen Ebene (P) begrenzt ist, wobei die Achse (306) nach Unten und nach Hinten von 5 bis 15 Grad, vorzugsweise von 8 Grad bezüglich der Horizontale, geneigt ist.

5. Landwirtschaftliche Maschine nach einem der vorhergehenden Ansprüche, in welcher die Achse (306) in die der Mittelebene (M) der landwirtschaftlichen Maschine parallelen Ebene (P) gerichtet ist.

6. Landwirtschaftliche Maschine nach einem der vorhergehenden Ansprüche, in welcher das Übertragungselement eine Kette ist.

7. Landwirtschaftliche Maschine nach einem der vorhergehenden Ansprüche, wobei die landwirtschaftliche Maschine eine Drillmaschine (5) ist, oder eine Maschine zur Verteilung von Pulvern oder Granulaten.

## Claims

1. Agricultural machine comprising a drive system (14) for a distribution element, the drive system (14) comprising:
- a drive wheel (22);
- a mechanical transmission device (23) comprising a transmission element from the drive wheel (22);
- an arm (21) supporting the mechanical transmission (23);
the arm (21) being rotatably mounted on an articulation (20) with an axis (306) transverse to a plane (L) extending across the width of the agricultural machine,
***characterized in that*:**
the said axis (306) of the articulation (20) is oriented rearwards and downwards, or reardwards and horizontally, from a front point (F) of the articulation (20), the arm (21) being pivotable from a work position in a transport position around the axis (306) from the outside of the machine.

2. Agricultural machine according to the previous claim in which the articulation (20) is arranged in an outer quarter of the machine, considering its width.

3. Agricultural machine according to one of the previous claims in which the articulation (20) is arranged behind a ladder (16) included in the agricultural machine.

4. Agricultural machine according to one of the previous claims in which the axis (306) is oriented rearwards in a quarter of a cone taking into account a front point (F) of the articulation (20), the quarter of a cone being delimited by a horizontal plane (H) and a plane (P) parallel to a median plane (M) of the agricultural machine, the axis (306) being tilted downwards and rearwards by 5 to 15 degrees relative to the horizontal, preferably by 8 degrees.

5. Agricultural machine according to one of the previous claims in which the axis (306) is oriented in the plane (P) which is parallel to a median plane (M) of the agricultural machine.

6. Agricultural machine according to one of the previous claims in which the transmission element is a chain.

7. Agricultural machine according to one of the previous claims, the said agricultural machine being a mechanical seed-drill (5), or an agricultural machine for powder or granulate distribution.
